# EUROPÄISCHE PATENTSCHRIFT

(11) **EP 2 281 706 B1**
(45) Veröffentlichungstag und Bekanntmachung des Hinweises auf die Patenterteilung: **08.10.2014**
(21) Anmeldenummer: 10006588.7
(22) Anmeldetag: 24.06.2010
(51) Int. Cl.: B60K 1/02

(54) **Fahrwagen für Inspektionsarbeiten**
Vehicle for inspection work
Chariot pour travaux d'inspection

(30) Priorität: 02.08.2009 DE 202009010444 U
(43) Veröffentlichungstag der Anmeldung: 09.02.2011
(73) Patentinhaber: HEMA Metallbearbeitung GmbH, 87452 Krugzell (DE)
(72) Erfinder: Maier, Friedolin, 87463 Reicholzried (DE); Heinzelmann, Gerhard, 87493 Lauben (DE)
(74) Vertreter: Fiener, Josef

(56) Entgegenhaltungen:
- EP-A1- 0 654 631
- DE-A1- 4 114 601
- US-A- 4 705 449
- US-A1- 2008 230 289
- US-B1- 6 621 516

## Beschreibung

Die Erfindung betrifft einen Fahrwagen für Inspektionsarbeiten mit den oberbegrifflichen Merkmalen des Anspruchs 1, wie aus DE 4114601 bekannt ist.

Für die Inspektion von Rohrleitungen wird herkömmlicherweise ein selbstfahrender Wagen eingesetzt, der eine Kamera trägt und über ein dem Wagen zugeordnetes Kabel von außerhalb der Rohrleitung fernsteuerbar ist. Bekannte Kamerawagen werden in zu inspizierenden Rohrleitungen eingeführt und fahren diese über eine bestimmte Strecke ab. Diese Kamerawagen besitzen hierzu meist ein Räder-Fahrwerk, das eine Bewegung im Kanal bzw. in der Rohrleitung zulässt. Für den Antrieb des Fahrwagens bzw. des Fahrwerks oder der daran angeordneten Räder verfügen die Kamerawagen in der Regel über einen Antrieb, beispielsweise einen Elektromotor. Dieser ist zentral im Kamerawagen angeordnet oder auf diesem aufgebaut und treibt über ein Getriebe bzw. ein entsprechendes Differential die Räder an. Die Antriebseinheit herkömmlicher Wagen ist dabei so am oder im Kamerawagen angeordnet, dass die Antriebswelle der Antriebseinheit in Längsrichtung des Wagens ausgerichtet angeordnet ist. Die Antriebswelle wirkt dann auf ein Kegelrad- oder Schneckengetriebe, das die Antriebsenergie an die Räder weitergibt, allerdings mit einem relativ geringen Wirkungsgrad.

Nachteilig an den bekannten Kamerawagen ist auch, dass aufgrund der Anordnung des Kegelrad- oder Verteilergetriebes der Aufbau wesentlich komplizierter wird. Daneben weist die Anordnung zusätzlicher Elemente im oder am Fahrwagen einen wesentlich höheren Platzbedarf auf. Dies erhöht zum einen die Größe und zum anderen die Aufbaumaße des Fahrwagens und beeinträchtigt somit dessen Flexibilität und Wendigkeit in den meist sehr engen Rohrleitungen. Die verwendeten Kegelradgetriebe erweisen sich darüber hinaus als störanfällig und besonders wartungsintensiv. Aufgrund von Wartungsarbeiten kommt es nicht selten zu längeren Stillstandszeiten der gesamten Vorrichtung.

Aufgabe der vorliegenden Erfindung ist es daher, einen Fahrwagen zur Verfügung zu stellen, der über einen besonders wartungsarmen Antrieb verfügt und zudem eine kompakte Bauform aufweist.

Diese Aufgabe wird gelöst durch einen Fahrwagen mit den Merkmalen des Anspruches 1. Vorteilhafte Weiterbildungen der Erfindung sind Gegenstand der abhängigen Ansprüche. Der erfindungsgemäße Fahrwagen eignet sich für Inspektionsarbeiten und kann insbesondere in Kanalrohren eingesetzt werden. Der Fahrwagen weist ein Gehäuse auf, an bzw. in dem das Fahrwerk des Fahrwagens angeordnet ist. Das Fahrwerk verfügt über an den Gehäuselängsseiten angeordnete Fahrwerksteile. Darüber hinaus umfasst der Fahrwagen einen Antrieb für das Fahrwerk, der in oder an dem Gehäuse angeordnet ist. Der erfindungsgemäße Fahrwagen ist **dadurch gekennzeichnet, dass** der Antrieb wenigstens zwei Antriebseinheiten umfasst, die jeweils eine Antriebswelle aufweisen, wobei die Antriebswellen quer zur Gehäuselängsachse ausgerichtet im Gehäuse angeordnet sind. Die Antriebseinheiten treiben über Antriebswellen jeweils verschiedene, d.h. rechte bzw. linke Fahrwerksteile an. So ist beispielsweise eine Antriebseinheit dem an der ersten, beispielsweise der in Fahrtrichtung linken Gehäuselängsseite angeordneten Fahrwerksteil zugeordnet und treibt nur diesen Fahrwerksteil an, während eine zweite Antriebseinheit der an der gegenüberliegenden, beispielsweise in Fahrtrichtung rechten Gehäuselängsseite angeordneten Fahrwerksteil zugeordnet ist und nur diesen Fahrwerksteil antreibt. Der Antrieb weist erfindungsgemäß hierbei zwei querverlaufende Antriebseinheiten auf.

Als empfehlenswert erweist es sich, wenn die Antriebseinheiten als getrennt steuerbare Motoren ausgebildet sind. Aufgrund dessen, dass die meisten Fahrwagen über eine kabelgebundene Verbindung mit einem außerhalb des Kanals bzw. der Rohrleitung positionierten Steuerfahrzeug verbunden sind, empfiehlt sich hier insbesondere die Verwendung von Elektromotoren, die durch das in den Fahrwagen geführte bzw. am Fahrwagen angeordnete Kabel mit Strom versorgt werden. Auch erweist sich die Verwendung von Elektromotoren beim Einsatz in Kanalrohren oder sonstigen Rohrleitungen als vorteilhaft, da keine Abgase emittiert werden. Ein weiterer Vorteil von Elektromotoren liegt in der einfachen Ansteuerbarkeit und der unmittelbaren Steuerreaktion derartiger Antriebe. Als günstig erweist es sich, wenn die Fahrwerksteile durch die Antriebswelle direkt angetrieben ausgebildet sind. Wird das Fahrwerk beispielsweise als Ketten- oder Raupenfahrwerk, was in einer als empfehlenswert angesehenen Weiterbildung der Erfindung vorgesehen ist, ausgebildet, so kann die Antriebswelle direkt auf das Ritzel oder Laufrolle des entsprechenden Laufwerkes wirken. Über dieses wird die Antriebsenergie direkt oder indirekt auf die Laufkette oder das Lauf- bzw. Gliederband übertragen. Daneben besteht auch die Möglichkeit, dass mehrere Antriebseinheiten vorgesehen sind, die auf den gleichen Fahrwerksteil einwirken und hierbei mehrere Laufräder, Turrasse oder Ritzel antreiben. Zusätzlich oder alternativ zum direkten Antrieb der Räder oder des Ketten- oder Raupenfahrwerkes bzw. des jeweiligen Fahrwerkteils ist die Zuordnung von einfachen Stirnrad-Getrieben vorgesehen.

Eine vorteilhafte Weiterbildung der Erfindung sieht vor, dass das Fahrwerk, wie oben bereits ausgeführt als Ketten- oder Raupenfahrzeug ausgebildet ist. Daneben kann es günstig sein, wenn das Fahrwerk stattdessen Räder aufweist. Auch hierbei gilt, dass ein direkter Antrieb der Räder bzw. einzelner Räder über die Antriebseinheit unmittelbar oder über einfache Stirnrad-Getriebe erfolgen kann.

Als vorteilhaft wird es im Zusammenhang mit der Verwendung von Rädern am Fahrwagen angesehen, wenn jedes Rad eine Achse umfasst, die in einem im Gehäuse des Fahrwagens angeordneten Lagersitz aufgenommen ist. Weiterhin ist in der vorteilhaften Weiterbildung der Erfindung vorgesehen, dass am Rad gehäuseseitig ein Gewindeflansch angeordnet ist, der zum Einschrauben in das Gehäuse und darüber zum Festlegen der Achse im Lagersitz dient. Über diese Ausführungsform des Rades bzw. der Räder des Fahrwagens wird eine besonders einfache Montage der Räder möglich. Dies bietet insbesondere bei der Wartung oder beim Austausch einzelner oder aller Räder Vorteile, da hier lediglich der Gewindeflansch, beispielsweise über einen durch das Rad hindurch steckbaren Stiftschlüssel in das Gehäuse eingedreht und angezogen wird. Die Achse bzw. der Lagersitz wird somit nicht direkt beim Einschrauben des Gewindeflansches mit dem angelegten Drehmoment beaufschlagt, wodurch sich die Standzeit der Achse bzw. des Lagersitzes wesentlich erhöht, da insbesondere keine Verformungen auftreten. Auch wird durch den Gewindeflansch ein Abschluss des Lagersitzes bzw. der Achse gegenüber dem Rad bzw. gegen an diesem anhaftenden Schmutz gebildet, der nicht bis zur Achse oder dem Lagersitz in das Fahrwerk eindringen kann. Hierdurch wird der Verschleiß des Lagers bzw. der Achse wesentlich verringert und Reparaturkosten wesentlich gesenkt werden.

Eine vorteilhafte Weiterbildung der Erfindung sieht vor, dass am Gewindeflansch zusätzlich eine die Achse bzw. das Lager um- oder abschließende Dichtung vorgesehen ist. Diese insbesondere als Wellendichtring ausgebildete Dichtung verbessert den Abschluss des Lagers und der Achse gegenüber am Fahrwagen anhaftenden bzw. beim Durchfahren von Kanälen oder Rohrleitungen aufgenommenen Schmutz und senkt damit ebenfalls den Verschleiß. Als günstig wird in diesem Zusammenhang angesehen, wenn jedes Rad als separate, insbesondere verkapselt ausgeführte Baugruppe ausgebildet ist. Hierdurch wird der Austausch einzelner Räder oder von Gruppen von Rädern wesentlich vereinfacht. Auch können aufgrund von schneller durchführbaren Reparaturen die Wartungs- und Instandhaltungskosten für die Vorrichtung weiter gesenkt werden.

Die Anordnung von zwei oder mehr Antriebseinheiten im Gehäuse macht die zusätzliche Anordnung von speziellen Kegelrad-Getrieben überflüssig. Es kann somit eine kompakte Bauform des Fahrwagens realisiert werden. Zudem kann das Gehäuse in vorteilhafter Weise als massiver Block ausgebildet werden, in dem lediglich Ausnehmungen für die Antriebseinheiten sowie ggf. für ein der jeweiligen Antriebseinheit zugeordnetes Getriebe vorgesehen werden müssen. Durch die Ausbildung des Gehäuses als massiver Block erhöht sich das Gewicht des gesamten Fahrwagens, was beim Befahren von Kanalrohren bzw. bei der Inspektion von Rohrleitungen und Kanälen Vorteile bezüglich Fahrwagenstabilität und verminderter Kippneigung bringt.

Für die Koordination der Antriebseinheiten bedarf der erfindungsgemäße Fahrwagen zusätzlich einer speziellen Steuerung. Über die Antriebseinheiten, die, wie bereits oben ausgeführt, jeweils verschiedene Fahrwerksteile antreiben, kann bei Verwendung einer entsprechenden Steuerung auch die Lenkung des Fahrwagens realisiert werden. Als günstig wird daher angesehen, wenn im Fahrwagen zusätzlich eine Steuereinheit vorgesehen ist. Über diese erfolgt dann die Ansteuerung der Antriebseinheiten aus dem außerhalb des Kanals bzw. der Rohrleitung positionierten Bedienungsfahrzeug bzw. einer entsprechenden Bedienungsvorrichtung. Die Steuereinheit kann als Leiterplatte oder Platine ausgebildet werden, in einer zusätzlich im Gehäuse vorgesehenen Ausnehmung angeordnet und über entsprechende Kabel oder Leitungen mit den Antriebseinheiten verbunden sein.

Der vorgeschlagene Fahrwagen löst somit die der Erfindung zugrunde liegende Aufgabe und stellt eine besonders kompakte und wartungsfreundliche Möglichkeit dar, um Rohrleitungen oder Kanäle zu inspizieren. Weitere Vorteile, Merkmale und Besonderheiten der Erfindung ergeben sich aus der nachfolgenden Beschreibung bevorzugter, jedoch nicht beschränkter Ausführungsformen der Erfindung, anhand der schematischen und nicht maßstabsgetreuen Zeichnungen. Es zeigen:
- Fig. 1: eine bevorzugte Ausführungsform des erfindungsgemäßen Fahrwagens mit insgesamt acht Rädern in Seitenansicht;
- Fig. 2: eine Draufsicht des in Fig. 1 dargestellten Fahrwagens bei abgenommenen Deckel; und
- Fig. 3: eine Darstellung einer bevorzugten Ausführungsform eines Rades des Fahrwagens in Schnittdarstellung.

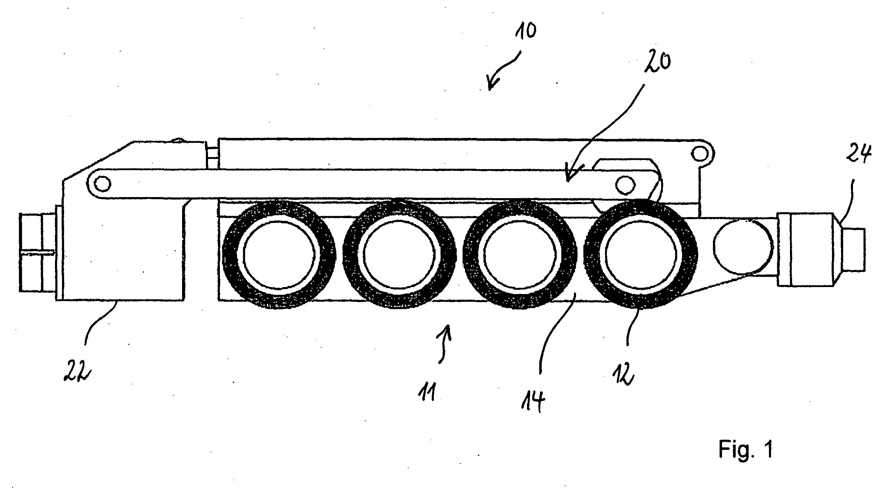

Fig. 1 zeigt eine bevorzugte Ausführungsform des erfindungsgemäßen Fahrwagens 10. Dieser ist im Ausführungsbeispiel mit einem Hubarm 20 ausgerüstet, an dessen Ende eine Aufnahme 22 für eine Kamera oder sonstige Anbauteile vorgesehen ist. Die Aufnahme 22 ist dabei über den Hubarm 20 anhebbar, so dass die Kamera für die Inspektion in einem Kanalrohr verschwenkt werden kann. Der in Fig. 1 dargestellte Fahrwagen 10 umfasst ein Fahrwerk 11, das insgesamt acht Räder 12 aufweist, von denen je vier an gegenüberliegenden Gehäuselängsseiten 14 angeordnet sind. Die Räder 12 ermöglichen eine Bewegung des Fahrwagens 10 in den zu inspizierenden Rohrleitungen oder Kanälen. Ein Antrieb des Fahrwerks 11 erfolgt im Ausführungsbeispiel der Fig. 1 elektromotorisch. Zu diesem Zweck weist der Fahrwagen 10 an seinem in Fig. 1 rechten Ende eine Anschlussbuchse 24 auf, über die der Fahrwagen 10 mit einem Kabel verbunden werden kann. Über dieses Kabel ist der Fahrwagen 10 mit einem beispielsweise außerhalb des Kanalsystems positionierten Bedienfahrzeug verbunden, über das auch die Steuerung, beispielsweise des Hubarmes 20 oder der an der Aufnahme 22 angeordneten Kamera erfolgt.

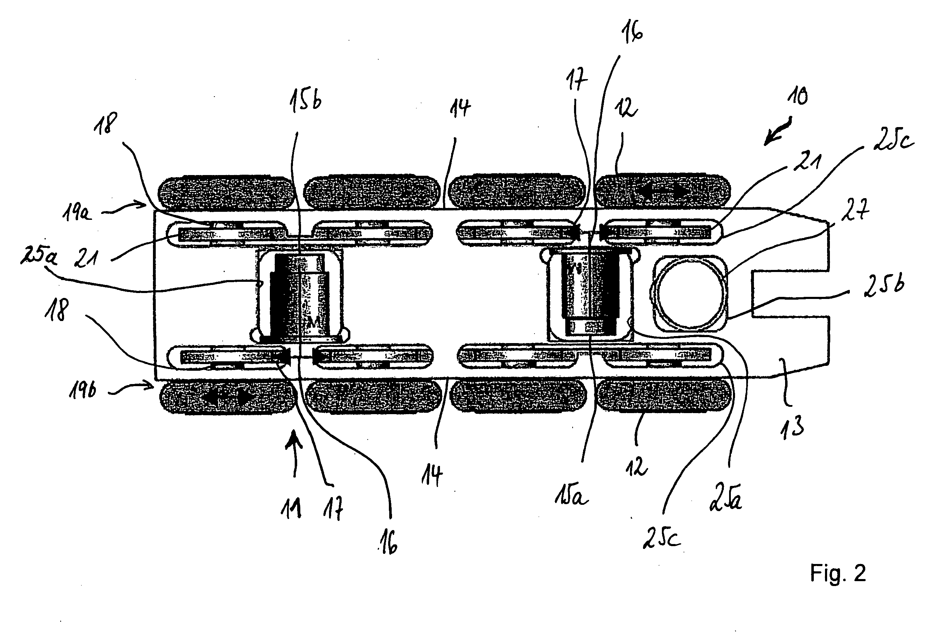

Fig. 2 zeigt den Fahrwagen 10 aus Fig. 1 in der Draufsicht bei geöffneten Gehäuse 13. Nicht dargestellt ist hier die Aufnahme 22. Das Fahrwerk 11 des in Fig. 2 dargestellten Fahrwagens 10 umfasst zwei Fahrwerksteile 19a,b, die an gegenüberliegenden Gehäuselängsseiten 14 angeordnet sind. Jedes Fahrwerksteil 19a,b weist insgesamt vier Räder 12 auf. Zwei nebeneinander liegende Räder 12 sind jeweils zu einer Gruppe zusammengefasst. Jedem Fahrwerksteil 19a,b ist eine eigene Antriebseinheit 15a,b zugeordnet, die jeweils eine aus zwei Rädern 12 bestehende Gruppe über Stirnräder antreibt. Der Antrieb folgt über ein der Antriebseinheit 15a,b jeweils zugeordnetes Getriebe 17, das direkt mit der Antriebswelle 16 der Antriebseinheit 15a,b in Verbindung steht. Das Getriebe 17 überträgt die Antriebsenergie auf die an den Achsen 18 der Räder 12 einer Gruppe angeordneten Zahnräder 21 mit kleineren Zwischen-Zahnrädern. Die Antriebseinheiten 15a,b sind im Ausführungsbeispiel als Elektromotoren ausgebildet und werden über ein in das Gehäuse 13 geführtes Kabel mit Strom versorgt. Die Antriebseinheiten 15a,b sind in Ausnehmungen 25a angeordnet, die in ihrer Größe auf die Dimensionen der Antriebseinheiten 15a,b abgestimmt sind.

Die Ausnehmungen 25a sind in einen das Gehäuse 13 bildenden massiven, beispielsweise aus Stahl bestehenden Materialblock, eingesenkt. Zusätzlich weist das Gehäuse 13 eine weitere Ausnehmung 25b auf, die als Aufnahme für den Antrieb 27 des Hubarmes 20 dient. Neben den Ausnehmungen 25a für die Antriebseinheiten 15a,b weist das Gehäuse weitere schlitzförmige Ausnehmungen 25c auf, in die Elemente des Getriebes 17 (Stirnräder) bzw. die Achsen 18 der Räder 12 eingesetzt sind. Durch die Verwendung von zwei Antriebseinheiten 15a,b, die zudem über eine entsprechende Steuerung getrennt ansteuerbar ausgebildet sind, ist auch eine Lenkung des Fahrwagens 10 ohne zusätzliche Lenker o.ä. gegeben. Neben der Ausführung mit Rädern 12 besteht selbstverständlich auch die Möglichkeit, die Fahrwerksteile 19a,b als Ketten oder als Raupen auszubilden, die dann ein angetriebenes Laufrad bzw. ein angetriebenes Ritzel pro Fahrwerkteil 19a,b aufweisen. Hierzu können auch die Räder 12 verwendet werden, wobei pro Seite nur zwei Räder erforderlich sind, über die dann eine Raupenkette oder ein Profilband aufgezogen sein kann. Auch hierdurch wird die Lenkbarkeit des Fahrwagens 10 gewährleistet. Durch eine entsprechende Ausgestaltung der Raupenkette kann aufgrund der höheren Kontaktfläche zudem eine noch bessere Manövrierbarkeit des Fahrwagens 10 in besonders schwer zugänglichen Kanalrohren oder Rohrleitungen erreicht werden.

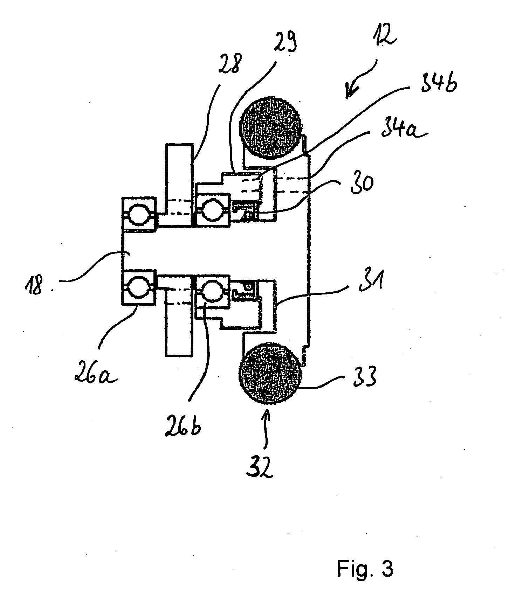

Fig. 3 zeigt ein als gekapselte Baugruppe ausgeführtes Rad 12. Dieses ist am Gehäuse 13 angeordnet und verfügt über eine Achse 18, die in das Gehäuse 13 hineinragt (vgl. Fig. 2) und dort in einem ersten Wälz- bzw. Kugellager 26a gelagert ist. Auf der Außenseite 28 des Gehäuses 13 verfügt die Baugruppe über ein weiteres, äußeres Kugellager 26b, das unmittelbar am Gehäuse 13 anliegt. Umschlossen wird das äußere Kugellager 26b durch einen Gewindeflansch 29, der in das Gehäuse 13 eingeschraubt wird. Der Gewindeflansch 29 umschließt das äußere Kugellager 26b. Zwischen Gewindeflansch 29 und Achse 18 des Rades 12 ist eine Dichtung 30 angeordnet, die im Ausführungsbeispiel als Wellendichtring ausgebildet ist. Das in Fig. 3 dargestellte Rad 12 ist als vollständig gekapselte Baugruppe ausgeführt und verhindert somit das Eindringen von Verschmutzungen in den Lagersitz, die Kugellager 26a,b oder zwischen Kugellager 26a,b und Achse 18. Die verkapselte Ausführung der Baugruppe gewährleistet somit einen geringen Verschleiß und senkt damit die Wartungskosten für die gesamte Vorrichtung.

Das Rad 12 weist eine die Achse 18 umfassende Nabe 31 auf, auf der ein die Lauffläche 32 des Rades 12 bildender Gummiring 33 aufgezogen ist. Die Nabe 31 ist in der Ausführung der Fig. 3 so ausgebildet, dass diese den Gewindeflansch 29 teilweise übergreift. Zudem weist die Nabe 31 wenigstens eine durchgehende Bohrung 34a auf, über die ein Stiftschlüssel in den Gewindeflansch 29 eingesteckt werden kann, um den Gewindeflansch 29 aus dem Gehäuse 13 auszuschrauben. Mit dem Aufschrauben des Gewindeflansches 29 kann die gesamte Radbaugruppe, bestehend aus Nabe 31 mit Gummiring 33, Dichtung 30 und äußerem Kugellager 26b vom Gehäuse 13 abgenommen und beispielsweise gereinigt oder ausgetauscht werden. Zum Einbau der Baugruppe wird wiederum ein Stiftschlüssel durch die Bohrung 34a bzw. Einstecköffnungen in der Nabe 31 hindurch in den Gewindeflansch 29, der hierzu ebenfalls über eine korrespondierende Bohrung 34b verfügt eingesteckt, der Gewindeflansch 29 anschließend mit dem Stiftschlüssel in das Gehäuse 13 eingeschraubt und dort fixiert. Nach Entnahme des Stiftschlüssels aus den Bohrungen 34a,b kann das Rad 12 frei drehen. Im Gehäuse 13 greift ein Getriebe 17 (vgl. Fig. 2) an der Achse 18 an und bewirkt dessen Antrieb.

### Bezugszeichenliste

10 = Fahrwagen
11 = Fahrwerk
12 = Rad
13 = Gehäuse
14 = Gehäuselängsseite
15a,b = Antriebseinheit
16 = Antriebswelle
17 = Getriebe
18 = Achse
19a,b = Fahrwerksteil
20 = Hubarm
21 = Zahnrad
22 = Aufnahme
24 = Anschlussbuchse
25a,b,c = Ausnehmung
26a,b = Kugellager
27 = Antrieb
28 = Außenseite
29 = Gewindeflansch
30 = Dichtung
31 = Nabe
32 = Lauffläche
33 = Gummiring
34a,b = Bohrung

## Patentansprüche

1. Fahrwagen (10) für Inspektionsarbeiten, insbesondere in Kanalrohren, mit einem Gehäuse (13), einem Fahrwerk (11) mit an den Gehäuselängsseiten (14) angeordneten Fahrwerksteilen (19a,b) und einem Antrieb für das Fahrwerk (11), wobei der Antrieb wenigstens zwei quer zur Gehäuselängsachse (14) angeordnete Antriebseinheiten (15a,b) mit Antriebswellen (16) umfasst, **dadurch gekennzeichnet, dass** die Antriebswellen (16) quer ausgerichtet im Gehäuse (13) angeordnet sind und die Antriebseinheiten (15a,b) jeweils verschiedene Fahnrverksteile (19a,b) antreiben, sowie das Gehäuse (13) als massiver Block mit Ausnehmungen (25a,b,c) für die Antriebseinheiten (15a,b) ausgebildet ist..

2. Fahrwagen (10) nach Anspruch 1, **dadurch gekennzeichnet, dass** die Antriebseinheiten (15a,b) als getrennt steuerbare Motoren, insbesondere Elektromotoren ausgebildet sind.

3. Fahrwagen (10) nach Anspruch 1 oder 2, **dadurch gekennzeichnet, dass** die Fahrwerksteile (19a,b) durch die Antriebswelle (16) direkt oder über ein der Antriebseinheit (15a,b) zugeordnetes Getriebe (17) angetrieben ausgebildet sind.

4. Fahrwagen (10) nach einem der Ansprüche 1 - 3, **dadurch gekennzeichnet, dass** das Fahrwerk (11) Räder (12) aufweist.

5. Fahrwagen (10) nach Anspruch 4, **dadurch gekennzeichnet, dass** jedes Rad (12) eine Achse (18) aufweist, die in einem im Gehäuse (13) angeordneten Lagersitz aufgenommen ist und am Rad (12) gehäuseseitig ein Gewindeflansch (29) zum Anordnen, insbesondere Einschrauben im Gehäuse (13) und zum Festlegen der Achse (18) im Lagersitz vorgesehen ist.

6. Fahrwagen (10) nach Anspruch 5, **dadurch gekennzeichnet, dass** jedes Rad (12) als separate, insbesondere gekapselte Baugruppe ausgebildet ist.

7. Fahrwagen (10) nach Anspruch 5 oder 6, **dadurch gekennzeichnet, dass** am Gewindeflansch (29) eine die Achse (18) umschließende Dichtung (30), insbesondere ein Wellendichtring angeordnet ist.

8. Fahrwagen (10) nach einem der Ansprüche 1 - 7, **dadurch gekennzeichnet, dass** eine Steuerung für die Antriebseinheiten (15a,b) vorgesehen ist.

## Claims

1. Vehicle (10) for inspection work, in particular in sewer pipes, with a housing (13), a chassis (11) with drive parts (19a, b) at the housing's longitudinal sides (14) and a drive for the chassis (11), wherein the drive comprises at least two drive units (15a, b) being arranged transversely to the housing's longitudinal axis (14) and including drive shafts (16),
**characterized in that**
the drive shafts (16) are arranged transversely in the housing (13) and the drive units (15a, b) power different chassis parts (19a, b), each, wherein the housing (13) is formed as a solid block with recesses (25a, b, c) for the drive units (15a, b).

2. Vehicle (10) according to claim 1, **characterized in that** the drive units (15a, b) are formed as separately controllable motors, in particular electric motors.

3. Vehicle (10) according to claim 1 or 2, **characterized in that** the drive parts (19a, b) are driven by the drive shaft (16) directly or via a drive unit (15a, b) associated with a transmission (17).

4. Vehicle (10) according to any one of claims 1-3, **characterized in that** the chassis (11) includes wheels (12).

5. Vehicle (10) according to claim 4, **characterized in that** each wheel (12) has an axis (18) arranged in a bearing seat of the housing (13), wherein the wheel (12) has a threaded flange (29) on the housing side for arranging, in particular screwing to the housing (13) and for fixing the axis (18) in the bearing seat.

6. Vehicle (10) according to claim 5, **characterized in that** each wheel (12) is formed as a separate, in particular encapsulated module.

7. Vehicle (10) according to claim 5 or 6, **characterized in that** a seal (30), enclosing the shaft (18) is arranged at the threaded flange (29), in particular a ring seal.

8. Vehicle (10) according to any one of claims 1- 7, **characterized in that** a control is provided for the drive units (15a, b).

## Revendications

1. Chariot (10) dévolu à des travaux d'inspection, en particulier dans des tubes de canalisation, comprenant un carter (13), un châssis de roulement (11) comportant des parties (19a, b) disposées sur les côtés longitudinaux (14) dudit carter, et un entraînement destiné audit châssis de roulement (11), ledit entraînement incluant au moins deux unités d'entraînement (15a, b) pourvues d'arbres d'entraînement (16) et agencées transversalement par rapport à l'axe longitudinal (14) dudit carter, **caractérisé par le fait que** les arbres d'entraînement (16) sont logés dans le carter (13) avec orientation transversale, et les unités d'entraînement (15a, b) entraînent respectivement différentes parties (19a, b) du châssis de roulement, ledit carter (13) étant par ailleurs réalisé sous la forme d'un bloc massif percé d'évidements (25a, b, c) dédiés auxditesunités d'entraînement (15a, b).

2. Chariot (10) selon la revendication 1, **caractérisé par le fait que** les unités d'entraînement (15a, b) sont réalisées sous la forme de moteurs, en particulier de moteurs électriques pouvant être commandés séparément.

3. Chariot (10) selon la revendication 1 ou 2, **caractérisé par le fait que** les parties (19a, b) du châssis de roulement sont conçues pour être entraînées par l'arbre d'entraînement (16), en mode direct, ou par l'intermédiaire d'une transmission (17) affectée à l'unité d'entraînement (15a, b).

4. Chariot (10) selon l'une des revendications 1-3, **caractérisé par le fait que** le châssis de roulement (11) est doté de roues (12).

5. Chariot (10) selon la revendication 4, **caractérisé par le fait que** chaque roue (12) présente un essieu (18) logé dans un siège de montage situé dans le carter (13), une bride filetée (29) étant prévue sur ladite roue (12), côté carter, en vue de la mise en place et notamment du vissage dans ledit carter (13), et de la consignation à demeure dudit essieu (18) dans ledit siège de montage.

6. Chariot (10) selon la revendication 5, **caractérisé par le fait que** chaque roue (12) est réalisée sous la forme d'un groupe structurel distinct, notamment encapsulé.

7. Chariot (10) selon la revendication 5 ou 6, **caractérisé par le fait qu'**une garniture d'étanchement (30), en particulier une bague ondulée d'étanchement ceinturant l'essieu (18), est implantée sur labride filetée (29).

8. Chariot (10) selon l'une des revendications 1-7, **caractérisé par** la présence d'une commande affectée aux unités d'entraînement (15a, b).
